# EUROPEAN PATENT APPLICATION

(11) **EP 1 125 952 A1**
(43) Date of publication of application: **22.08.2001**
(21) Application number: 01300584.8
(22) Date of filing: 23.01.2001
(51) Int. Cl.: C08F 4/70, C08F 10/00

(54) **Catalyst preparation method**

(30) Priority: 14.02.2000 GB 0003356
(71) Applicant: BP Chemicals Limited, London EC2M 7BA (GB)
(72) Inventor: Payne, Marc John, Saltend, Hull HU12 8DS (GB)
(74) Representative: Smith, Julian Philip Howard

(57) **Abstract**

A process for the preparation of a supported catalyst is disclosed, comprising the steps of
a) contacting a support material containing 1-10 % water with a trialkylaluminium compound; and
b) contacting the resulting material with a complex of the formula (I) 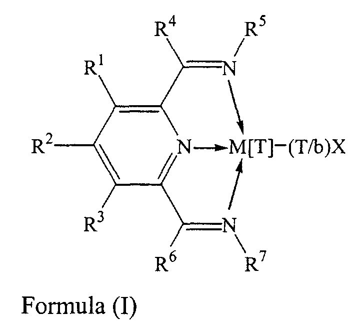 wherein M is Fe[II], Fe[III], Co[I], Co[II], Co[III], Mn[I], Mn[II], Mn[III], Mn[IV], Ru[II], Ru[III] or Ru[IV]; X represents an atom or group covalently or ionically bonded to the transition metal M; T is the oxidation state of the transition metal M and b is the valency of the atom or group X; R¹ to R⁷ are each independently selected from hydrogen, halogen, hydrocarbyl, substituted hydrocarbyl, heterohydrocarbyl, substituted heterohydrocarbyl or SiR'₃ where each R' is independently selected from hydrogen, halogen, hydrocarbyl, substituted hydrocarbyl, heterohydrocarbyl, substituted heterohydrocarbyl.

## Description

This invention relates to a process for preparing a supported transition metal catalyst for use in the polymerization of olefins. More particularly, it relates to a method of incorporating an alumoxane activator into the support used for the catalyst.

Olefin polymerization catalysts comprising a metallocene and an aluminium alkyl component were first proposed in about 1956. Australian patent 220436 proposed for use as a polymerization catalyst a bis-(cyclopentadienyl) titanium, zirconium, or vanadium salt as reacted with a variety of halogenated or unhalogenated aluminium alkyl compounds . Although such complexes were capable of catalyzing the polymerization of ethylene, such catalytic complexes, especially those made by reaction with an trialkylaluminium, had an insufficient level of catalytic activity to be employed commercially for production of polyethylene or copolymers of ethylene.

To realize the benefits of such catalyst systems, one must use or produce the required alumoxane cocatalyst component. An alumoxane is produced by the reaction of an aluminium alkyl with water. The reaction of an aluminium alkyl with water is very rapid and highly exothermic. Because of the extreme violence of the reaction the alumoxane cocatalyst component has in the past been separately prepared by one of two general methods. Alumoxanes may be prepared by adding an extremely finely divided water, such as in the form of a humid solvent, to a solution of aluminium alkyl in benzene or other aliphatic hydrocarbons. The production of an alumoxane by such procedures requires use of explosion-proof equipment and very close control of the reaction conditions in order to reduce potential fire and exposion hazards. For this reason, it has been preferred to produce alumoxane by reacting an aluminium alkyl with a hydrated salt, such as hydrated copper sulfate. Before the alumoxane can be used for the production of an active catalyst complex the hydrated salt reagent must be separated from the alumoxane to prevent it from becoming entrained in the catalyst complex and thus contaminating any polymer produced therewith.

Our own WO99/12981 discloses that 1-olefins may be polymerised by contacting them with certain transition metal, particularly iron, complexes of selected 2,6-pyridinecarboxaldehydebis(imines) and 2,6-diacylpyridinebis(imines). Catalyst supports such as silica, alumina and zirconia are disclosed. Activated supported catalysts may be prepared by adding separately formed alumoxane and the metal complex to a support.

EP 323716A discloses a process in which a silica gel supported metallocene alumoxane catalyst is prepared by adding the undehydrated silica gel to a stirred solution of trialkylaluminium in an amount sufficient to provide a mole ratio of trialkylaluminium to water of from about 3:1 to about 1:2, and thereafter adding to this stirred solution a metallocene.

We have discovered a process for making supported catalysts comprising tridentate nitrogen-containing transition metal complexes such as those disclosed in WO99/12981 in which a hydrated support is combined with an alkylaluminium compound to form an alumoxane in-situ, followed by impregnation with the transition metal complex. This results in a catalyst which is cheaper to make (by virtue of using lkyl aluminium rather than alumoxane) whilst having equivalent or greater activity.

Accordingly in one aspect the present invention provides a process for the preparation of a supported catalyst, comprising the steps of
a) contacting a support material containing 1-10 % water with a trialkylaluminium compound
b) contacting the resulting material with a complex of the formula (I) 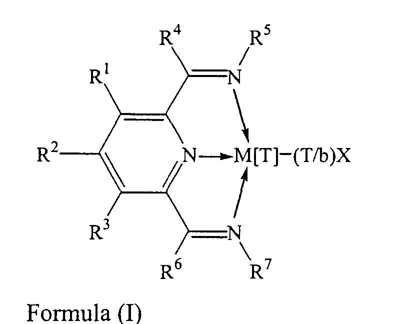
wherein M is Fe[II], Fe[III], Co[I], Co[II], Co[III], Mn[I], Mn[II], Mn[III], Mn[IV], Ru[II], Ru[III] or Ru[IV]; X represents an atom or group covalently or ionically bonded to the transition metal M; T is the oxidation state of the transition metal M and b is the valency of the atom or group X; R¹ to R⁷ are each independently selected from hydrogen, halogen, hydrocarbyl, substituted hydrocarbyl, heterohydrocarbyl, substituted heterohydrocarbyl or SiR'₃ where each R' is independently selected from hydrogen, halogen, hydrocarbyl, substituted hydrocarbyl, heterohydrocarbyl, substituted heterohydrocarbyl.

The support material is preferably silica, alumina, aluminosilicate or crosslinked polystyrene/polyvinylalcohol.

In one embodiment of the process, the support is first dehydrated (eg by calcining at a temperature >200 °C) before being contacted with a specific amount of water, in order to ensure that the amount of water present in the support prior to contact with the trialkylaluminium compound is known.

The supported catalyst is generally prepared by contacting the support material with a solution of trialkylaluminium in an amount sufficient to provide a mole ratio of trialkylaluminium to water of from 3:1 to 1:2, preferably between 1.2:1 and 0.9:1. This solution is then contacted with the transition metal complex of formula (I) in an amount sufficient to provide an aluminium to transition metal ratio of from 1000:1 to 1:1, preferably from 300:1 to 10:1, most preferably from 150:1 to 30:1.

A preferred trialkylaluminium compound is trimethylaluminium (TMA), but triethylaluminium (TEA), tri-isobutylaluminium (TIBA) or tri-n-octylaluminium may also be employed.

In the preferred process, the hydrated support is contacted with the trialkylaluminium in the presence of a solvent. Preferred solvents are inert hydrocarbons, in particular a hydrocarbon that is inert with respect to the catalyst system. Such solvents are well known and include, for example, isobutane, butane, pentane, hexane, heptane, octane, cyclohexane, methylcyclohexane, toluene, xylene and the like. The solvent is then removed, and the solids dried to form a free flowing powder. Drying can be accomplished by heating or vacuum.

It is preferred that the trialkylaluminium is added to the hydrated support rather than the other way round, although both orders are possible.

Thereafter a transition metal complex is added to the stirred suspension of alumoxane treated support. The mixture is conveniently stirred for between 30 minutes and two hours, optionally under heating, e.g. to 60-80°C. The solvent is removed and the residual solids are dried to form a free flowing powder.

The dried free flowing catalyst powder comprises the above metal complex and alumoxane activator adsorbed or chemically bound upon the surface of the support particles. Alumoxanes are well known in the art as typically the oligomeric compounds which can be prepared by the controlled addition of water to an alkylaluminium compound, for example trimethylaluminium. Such compounds can be linear, cyclic or mixtures thereof. Commercially available alumoxanes are generally believed to be mixtures of linear and cyclic compounds. The cyclic alumoxanes can be represented by the formula [R¹⁶AlO]ₛ and the linear alumoxanes by the formula R¹⁷(R¹⁸AlO)ₛ wherein s is a number from about 2 to 50, and wherein R¹⁶, R¹⁷, and R¹⁸ represent hydrocarbyl groups, preferably C₁ to C₆ alkyl groups, for example methyl, ethyl or butyl groups. Alkylalumoxanes such as methylalumoxane (MAO) are preferred.

In the complex of Formula (I) above, R⁵ and R⁷ are preferably independently selected from substituted or unsubstituted alicyclic, heterocyclic or aromatic groups, for example, phenyl, 1-naphthyl, 2-naphthyl, 2-methylphenyl, 2-ethylphenyl, 2,6-diisopropylphenyl, 2,3-diisopropylphenyl, 2,4-diisopropylphenyl, 2,6-di-n-butylphenyl, 2,6-dimethylphenyl, 2,3-dimethylphenyl, 2,4-dimethylphenyl, 2-t-butylphenyl, 2,6-diphenylphenyl, 2,4,6-trimethylphenyl, 2,6-trifluoromethylphenyl, 4-bromo-2,6-dimethylphenyl, 3,5-dichloro2,6-diethylphenyl, and 2,6-bis(2,6-dimethylphenyl)phenyl, cyclohexyl and pyridinyl.

In a preferred embodiment R⁵ is represented by the group "P" and R⁷ is represented by the group "Q" as follows: 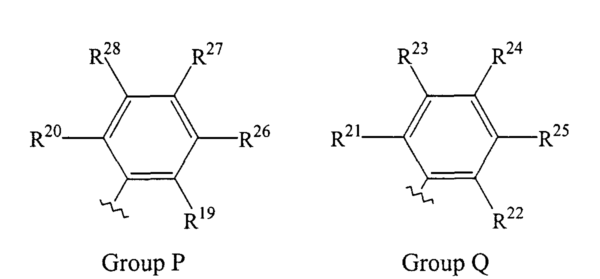 wherein R¹⁹ to R²⁸ are independently selected from hydrogen, halogen, hydrocarbyl, substituted hydrocarbyl, heterohydrocarbyl or substituted heterohydrocarbyl; when any two or more of R¹ to R⁴, R⁶ and R¹⁹ to R²⁸ are hydrocarbyl, substituted hydrocarbyl, heterohydrocarbyl or substituted heterohydrocarbyl, said two or more can be linked to form one or more cyclic substituents.

The ring systems P and Q are preferably independently 2,6-hydrocarbylphenyl or fused-ring polyaromatic, for example, 1-naphthyl, 2-naphthyl, 1-phenanthrenyl and 8-quinolinyl.

Preferably at least one of R¹⁹, R²⁰, R²¹ and R²² is hydrocarbyl, substituted hydrocarbyl, heterohydrocarbyl or substituted heterohydrocarbyl. More preferably at least one of R¹⁹ and R²⁰, and at least one of R²¹ and R²², is hydrocarbyl, substituted hydrocarbyl, heterohydrocarbyl or substituted heterohydrocarbyl. Most preferably R¹⁹, R²⁰, R²¹ and R²² are all independently selected from hydrocarbyl, substituted hydrocarbyl, heterohydrocarbyl or substituted heterohydrocarbyl. R¹⁹, R²⁰, R²¹ and R²² are preferably independently selected from methyl, ethyl, n-propyl, iso-propyl, n-butyl, sec-butyl, tert.-butyl, n-pentyl, neopentyl, n-hexyl, 4-methylpentyl, n-octyl, phenyl and benzyl.

R¹, R², R³, R⁴, R⁶, R¹⁹, R²⁰, R²¹, R²², R²³, R²⁵, R²⁶ and R²⁸ are preferably independently selected from hydrogen and C₁ to C₈ hydrocarbyl, for example, methyl, ethyl, n-propyl, n-butyl, t-butyl, n-hexyl, n-octyl, phenyl and benzyl.

In an alternative embodiment R⁵ is a group having the formula -NR²⁹R³⁰ and R⁷ is a group having the formula -NR³¹R³², wherein R²⁹ to R³² are independently selected from hydrogen, halogen, hydrocarbyl, substituted hydrocarbyl, heterohydrocarbyl or substituted heterohydrocarbyl; when any two or more of R¹ to R⁴, R⁶ and R²⁹ to R³² are hydrocarbyl, substituted hydrocarbyl, heterohydrocarbyl or substituted heterohydrocarbyl, said two or more can be linked to form one or more cyclic substituents.

Each of the nitrogen atoms is coordinated to the metal by a "dative" bond, ie a bond formed by donation of a lone pair of electrons from the nitrogen atom. The remaining bonds on each of these atoms are covalent bonds formed by electron sharing between the atoms and the organic ligand as shown in the defined formula for the metal complex illustrated above.

The atom or group represented by X in the compounds of Formula (I) can be, for example, selected from halide, sulphate, nitrate, thiolate, thiocarboxylate, BF₄⁻, PF₆⁻, hydride, hydrocarbyloxide, carboxylate, hydrocarbyl, substituted hydrocarbyl and heterohydrocarbyl, or β-diketonates. Examples of such atoms or groups are chloride, bromide, methyl, ethyl, propyl, butyl, octyl, decyl, phenyl, benzyl, methoxide, ethoxide, isopropoxide, tosylate, triflate, formate, acetate, phenoxide and benzoate. Preferred examples of the atom or group X in the compounds of Formula (I) are halide, for example, chloride, bromide; hydride; hydrocarbyloxide, for example, methoxide, ethoxide, isopropoxide, phenoxide; carboxylate, for example, formate, acetate, benzoate; hydrocarbyl, for example, methyl, ethyl, propyl, butyl, octyl, decyl, phenyl, benzyl; substituted hydrocarbyl; heterohydrocarbyl; tosylate; and triflate. Preferably X is selected from halide, hydride and hydrocarbyl. Chloride is particularly preferred.

The following are examples of nitrogen-containing transition metal complexes that can be employed in the present invention:
2,6-diacetylpyridinebis(2,6-diisopropylanil)FeCl₂
2,6-diacetylpyridinebis(2,6-diisopropylanil)MnCl₂
2,6-diacetylpyridinebis(2,6-diisopropylanil)CoCl₂
2,6-diacetylpyridinebis(2-tert.-butylanil)FeCl₂
2,6-diacetylpyridinebis(2,3-dimethylanil)FeCl₂
2,6-diacetylpyridinebis(2-methylanil)FeCl₂
2,6-diacetylpyridinebis(2,4-dimethylanil)FeCl₂
2,6-diacetylpyridinebis(2,6-dimethylanil)FeCl₂
2,6-diacetylpyridinebis(2,4,6 trimethyl anil)FeCl₂
2,6-diacetylpyridinebis(2,6-dimethyl 4-t-butyl anil)FeCl₂
2,6-dialdiminepyridinebis(2,6-dimethylanil)FeCl₂
2,6-dialdiminepyridinebis(2,6-diethylanil)FeCl₂
2,6-dialdiminepyridinebis(2,6-diisopropylanil)FeCl₂
2,6-dialdiminepyridinebis(1-naphthil)FeCl₂ and
2,6-bis(1,1-diphenylhydrazone)pyridine.FeCl₂.

The supported catalysts made according to the present invention can if desired comprise more than one of the above-mentioned compounds. The catalysts can also include one or more other types of catalyst, such as those of the type used in conventional Ziegler-Natta catalyst systems, metallocene-based catalysts, monocyclopentadienyl- or constrained geometry based catalysts, or heat activated supported chromium oxide catalysts (eg Phillips-type catalyst).

In use, the supported catalysts made according to the present invention may additionally incorporate further activators. Generally such activators are selected from organoaluminium compounds and hydrocarbylboron compounds. Suitable organoaluminium compounds include additional compounds of the formula AlR₃, where each R is independently C₁-C₁₂ alkyl or halo. Examples include trimethylaluminium (TMA), triethylaluminium (TEA), tri-isobutylaluminium (TIBA), tri-n-octylaluminium, methylaluminium dichloride, ethylaluminium dichloride, dimethylaluminium chloride, diethylaluminium chloride, ethylaluminiumsesquichloride, methylaluminiumsesquichloride, and further alumoxanes.

Mixtures of alkylalumoxanes and trialkylaluminium compounds are particularly preferred, such as MAO with TMA or TIBA. In this context it should be noted that the term "alkylalumoxane" as used in this specification includes alkylalumoxanes available commercially which may contain a proportion, typically about 10wt%, but optionally up to 50wt%, of the corresponding trialkylaluminium; for instance, commercial MAO usually contains approximately 10wt% trimethylaluminium (TMA), whilst commercial MMAO contains both TMA and TIBA. Quantities of alkylalumoxane quoted herein include such trialkylaluminium impurities, and accordingly quantities of trialkylaluminium compounds quoted herein are considered to comprise compounds of the formula AlR₃ additional to any AlR₃ compound incorporated within the alkylalumoxane when present.

Examples of suitable hydrocarbylboron compounds are boroxines, trimethylboron, triethylboron, dimethylphenylammoniumtetra(phenyl)borate, trityltetra(phenyl)borate, triphenylboron, dimethylphenylammonium tetra(pentafluorophenyl)borate, sodium tetrakis[(bis-3,5-trifluoromethyl)phenyl] borate, H⁺(OEt₂)[(bis-3,5-trifluoromethyl)phenyl]borate, trityltetra(pentafluorophenyl)borate and tris(pentafluorophenyl) boron.

An alternative class of activators comprise salts of a cationic oxidising agent and a non-coordinating compatible anion. Examples of cationic oxidising agents include: ferrocenium, hydrocarbyl-substituted ferrocenium, Ag⁺, or Pb²⁺. Examples of non-coordinating compatible anions are BF₄⁻, SbCl₆⁻, PF₆⁻, tetrakis(phenyl)borate and tetrakis(pentafluorophenyl)borate.

A preferred support is silica. Silica particles having a surface area in the range of 10m²/g to 700m²/g, preferably 100-500m²/g and desirably 200-400m²/g, a pore volume of 3 to 0.5 cm³/g and preferably 2 to 1 cm³/g and an adsorbed water content of from 1 to 10 weight percent, preferably from 3 to 7 weight percent are preferred.

The present invention further provides a process for the polymerisation and copolymerisation of 1-olefins, comprising contacting the monomeric olefin under polymerisation conditions with a supported polymerisation catalyst made according to the present invention. A preferred process comprises the steps of:
a) preparing a prepolymer-based catalyst by contacting one or more 1-olefins with a catalyst, and
b) contacting the prepolymer-based catalyst with one or more 1-olefins,
wherein the catalyst is as defined above.

In the text hereinbelow, the term "catalyst" is intended to include "prepolymer-based catalyst" as defined above.

The polymerisation conditions can be, for example, solution phase, slurry phase, gas phase or bulk phase, with polymerisation temperatures ranging from -100°C to +300°C, and at pressures of atmospheric and above, particularly from 140 to 4100 kPa. If desired, the catalyst can be used to polymerise ethylene under high pressure/high temperature process conditions wherein the polymeric material forms as a melt in supercritical ethylene. Preferably the polymerisation is conducted under gas phase fluidised bed or stirred bed conditions.

Suitable monomers for use in the polymerisation process are, for example, ethylene and C₂₋₂₀ α-olefins, specifically propylene, 1-butene, 1-pentene, 1-hexene, 4-methylpentene-1, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Other monomers include methyl methacrylate, methyl acrylate, butyl acrylate, acrylonitrile, vinyl acetate, and styrene. Preferred monomers for homopolymerisation processes are ethylene and propylene.

The process of the invention can also be used for copolymerising ethylene or propylene with each other or with other 1-olefins such as 1-butene, 1-hexene, 4-methylpentene-1, and octene, or with other monomeric materials, for example, methyl methacrylate, methyl acrylate, butyl acrylate, acrylonitrile, vinyl acetate, and styrene.

Irrespective of the polymerisation or copolymerisation technique employed, polymerisation or copolymerisation is typically carried out under conditions that substantially exclude oxygen, water, and other materials that act as catalyst poisons. Also, polymerisation or copolymerisation can be carried out in the presence of additives to control polymer or copolymer molecular weights.

The use of hydrogen gas as a means of controlling the average molecular weight of the polymer or copolymer applies generally to the polymerisation process of the present invention. For example, hydrogen can be used to reduce the average molecular weight of polymers or copolymers prepared using gas phase, slurry phase, bulk phase or solution phase polymerisation conditions. The quantity of hydrogen gas to be employed to give the desired average molecular weight can be determined by simple "trial and error" polymerisation tests.

The polymerisation process of the present invention provides polymers and copolymers, especially ethylene polymers, at remarkably high productivity (based on the amount of polymer or copolymer produced per unit weight of complex employed in the catalyst system). This means that relatively very small quantities of transition metal complex are consumed in commercial processes using the process of the present invention. It also means that when the polymerisation process of the present invention is operated under polymer recovery conditions that do not employ a catalyst separation step, thus leaving the catalyst, or residues thereof, in the polymer (e.g. as occurs in most commercial slurry and gas phase polymerisation processes), the amount of transition metal complex in the produced polymer can be very small.

Slurry phase polymerisation conditions or gas phase polymerisation conditions are particularly useful for the production of high or low density grades of polyethylene, and polypropylene. In these processes the polymerisation conditions can be batch, continuous or semi-continuous. Furthermore, one or more reactors may be used, e.g. from two to five reactors in series. Different reaction conditions, such as different temperatures or hydrogen concentrations may be employed in the different reactors. In the slurry phase process and the gas phase process, the catalyst is generally metered and transferred into the polymerisation zone in the form of a particulate solid either as a dry powder (e.g. with an inert gas) or as a slurry. This solid can be, for example, a solid catalyst system formed from the one or more of complexes of the invention and an activator with or without other types of catalysts, or can be the solid catalyst alone with or without other types of catalysts. In the latter situation, the activator can be fed to the polymerisation zone, for example as a solution, separately from or together with the solid catalyst. Preferably the catalyst system or the transition metal complex component of the catalyst system employed in the slurry polymerisation and gas phase polymerisation is supported on one or more support materials. Most preferably the catalyst system is supported on the support material prior to its introduction into the polymerisation zone. Impregnation of the support material can be carried out by conventional techniques, for example, by forming a solution or suspension of the catalyst components in a suitable diluent or solvent, and slurrying the support material therewith. The support material thus impregnated with catalyst can then be separated from the diluent for example, by filtration or evaporation techniques. Once the polymer product is discharged from the reactor, any associated and absorbed hydrocarbons are substantially removed, or degassed, from the polymer by, for example, pressure let-down or gas purging using fresh or recycled steam, nitrogen or light hydrocarbons (such as ethylene). Recovered gaseous or liquid hydrocarbons may be recycled to the polymerisation zone.

In the slurry phase polymerisation process the solid particles of catalyst, or supported catalyst, are fed to a polymerisation zone either as dry powder or as a slurry in the polymerisation diluent. The polymerisation diluent is compatible with the polymer(s) and catalyst(s), and may be an alkane such as hexane, heptane, isobutane, or a mixture of hydrocarbons or paraffins. Preferably the particles are fed to a polymerisation zone as a suspension in the polymerisation diluent. The polymerisation zone can be, for example, an autoclave or similar reaction vessel, or a continuous loop reactor, e.g. of the type well-know in the manufacture of polyethylene by the Phillips Process. When the polymerisation process of the present invention is carried out under slurry conditions the polymerisation is preferably carried out at a temperature above 0°C, most preferably above 15°C. The polymerisation temperature is preferably maintained below the temperature at which the polymer commences to soften or sinter in the presence of the polymerisation diluent. If the temperature is allowed to go above the latter temperature, fouling of the reactor can occur. Adjustment of the polymerisation within these defined temperature ranges can provide a useful means of controlling the average molecular weight of the produced polymer. A further useful means of controlling the molecular weight is to conduct the polymerisation in the presence of hydrogen gas which acts as chain transfer agent. Generally, the higher the concentration of hydrogen employed, the lower the average molecular weight of the produced polymer.

In bulk polymerisation processes, liquid monomer such as propylene is used as the polymerisation medium.

Methods for operating gas phase polymerisation processes are well known in the art. Such methods generally involve agitating (e.g. by stirring, vibrating or fluidising) a bed of catalyst, or a bed of the target polymer (i.e. polymer having the same or similar physical properties to that which it is desired to make in the polymerisation process) containing a catalyst, and feeding thereto a stream of monomer at least partially in the gaseous phase, under conditions such that at least part of the monomer polymerises in contact with the catalyst in the bed. The bed is generally cooled by the addition of cool gas (e.g. recycled gaseous monomer) and/or volatile liquid (e.g. a volatile inert hydrocarbon, or gaseous monomer which has been condensed to form a liquid). The polymer produced in, and isolated from, gas phase processes forms directly a solid in the polymerisation zone and is free from, or substantially free from liquid. As is well known to those skilled in the art, if any liquid is allowed to enter the polymerisation zone of a gas phase polymerisation process the quantity of liquid in the polymerisation zone is small in relation to the quantity of polymer present. This is in contrast to "solution phase" processes wherein the polymer is formed dissolved in a solvent, and "slurry phase" processes wherein the polymer forms as a suspension in a liquid diluent.

The gas phase process can be operated under batch, semi-batch, or so-called "continuous" conditions. It is preferred to operate under conditions such that monomer is continuously recycled to an agitated polymerisation zone containing polymerisation catalyst, make-up monomer being provided to replace polymerised monomer, and continuously or intermittently withdrawing produced polymer from the polymerisation zone at a rate comparable to the rate of formation of the polymer, fresh catalyst being added to the polymerisation zone to replace the catalyst withdrawn form the polymerisation zone with the produced polymer.

For typical production of impact copolymers, homopolymer formed from the first monomer in a first reactor is reacted with the second monomer in a second reactor. For manufacture of propylene/ethylene impact copolymer in a gas-phase process, propylene is polymerized in a first reactor; reactive polymer transferred to a second reactor in which ethylene or other comonomer is added. The result is an intimate mixture of a isotactic polypropylene chains with chains of a random propylene/ethylene copolymer. A random copolymer typically is produced in a single reactor in which a minor amount of a comonomer (typically ethylene) is added to polymerizing chains of propylene.

Methods for operating gas phase fluidised bed processes for making polyethylene, ethylene copolymers and polypropylene are well known in the art. The process can be operated, for example, in a vertical cylindrical reactor equipped with a perforated distribution plate to support the bed and to distribute the incoming fluidising gas stream through the bed. The fluidising gas circulating through the bed serves to remove the heat of polymerisation from the bed and to supply monomer for polymerisation in the bed. Thus the fluidising gas generally comprises the monomer(s) normally together with some inert gas (e.g. nitrogen or inert hydrocarbons such as methane, ethane, propane, butane, pentane or hexane) and optionally with hydrogen as molecular weight modifier. The hot fluidising gas emerging from the top of the bed is led optionally through a velocity reduction zone (this can be a cylindrical portion of the reactor having a wider diameter) and, if desired, a cyclone and or filters to disentrain fine solid particles from the gas stream. The hot gas is then led to a heat exchanger to remove at least part of the heat of polymerisation. Catalyst is preferably fed continuously or at regular intervals to the bed. At start up of the process, the bed comprises fluidisable polymer which is preferably similar to the target polymer. Polymer is produced continuously within the bed by the polymerisation of the monomer(s). Preferably means are provided to discharge polymer from the bed continuously or at regular intervals to maintain the fluidised bed at the desired height. The process is generally operated at relatively low pressure, for example, at 10 to 50 bars, and at temperatures for example, between 50 and 120 °C. The temperature of the bed is maintained below the sintering temperature of the fluidised polymer to avoid problems of agglomeration.

In the gas phase fluidised bed process for polymerisation of olefins the heat evolved by the exothermic polymerisation reaction is normally removed from the polymerisation zone (i.e. the fluidised bed) by means of the fluidising gas stream as described above. The hot reactor gas emerging from the top of the bed is led through one or more heat exchangers wherein the gas is cooled. The cooled reactor gas, together with any make-up gas, is then recycled to the base of the bed. In the gas phase fluidised bed polymerisation process of the present invention it is desirable to provide additional cooling of the bed (and thereby improve the space time yield of the process) by feeding a volatile liquid to the bed under conditions such that the liquid evaporates in the bed thereby absorbing additional heat of polymerisation from the bed by the "latent heat of evaporation" effect. When the hot recycle gas from the bed enters the heat exchanger, the volatile liquid can condense out. In one embodiment of the present invention the volatile liquid is separated from the recycle gas and reintroduced separately into the bed. Thus, for example, the volatile liquid can be separated and sprayed into the bed. In another embodiment of the present invention the volatile liquid is recycled to the bed with the recycle gas. Thus the volatile liquid can be condensed from the fluidising gas stream emerging from the reactor and can be recycled to the bed with recycle gas, or can be separated from the recycle gas and then returned to the bed.

The method of condensing liquid in the recycle gas stream and returning the mixture of gas and entrained liquid to the bed is described in EP-A-0089691 and EP-A-0241947. It is preferred to reintroduce the condensed liquid into the bed separate from the recycle gas using the process described in our US Patent 5541270, the teaching of which is hereby incorporated into this specification.

When using the catalysts of the present invention under gas phase polymerisation conditions, the catalyst, or one or more of the components employed to form the catalyst can, for example, be introduced into the polymerisation reaction zone in liquid form, for example, as a solution in an inert liquid diluent. Thus, for example, the transition metal component, or the activator component, or both of these components can be dissolved or slurried in a liquid diluent and fed to the polymerisation zone. Under these circumstances it is preferred the liquid containing the component(s) is sprayed as fine droplets into the polymerisation zone. The droplet diameter is preferably within the range 1 to 1000 microns. EP-A-0593083, the teaching of which is hereby incorporated into this specification, discloses a process for introducing a polymerisation catalyst into a gas phase polymerisation. The methods disclosed in EP-A-0593083 can be suitably employed in the polymerisation process of the present invention if desired.

Although not usually required, upon completion of polymerisation or copolymerisation, or when it is desired to terminate polymerisation or copolymerisation or at least temporarily deactivate the catalyst or catalyst component of this invention, the catalyst can be contacted with water, alcohols, acetone, or other suitable catalyst deactivators a manner known to persons of skill in the art.

Homopolymerisation of ethylene with the catalysts of the invention may produce so-called "high density" grades of polyethylene. These polymers have relatively high stiffness and are useful for making articles where inherent rigidity is required. Copolymerisation of ethylene with higher 1-olefins (eg butene, hexene or octene) can provide a wide variety of copolymers differing in density and in other important physical properties. Particularly important copolymers made by copolymerising ethylene with higher 1-olefins with the catalysts of the invention are the copolymers having a density in the range of 0.91 to 0.93. These copolymers which are generally referred to in the art as linear low density polyethylene, are in many respects similar to the so called low density polyethylene produced by the high pressure free radical catalysed polymerisation of ethylene. Such polymers and copolymers are used extensively in the manufacture of flexible blown film.

Propylene polymers produced by the process of the invention include propylene homopolymer and copolymers of propylene with less than 50 mole % ethylene or other alpha-olefin such as butene-1, pentene-1, 4-methylpentene-1, or hexene-1, or mixtures thereof. Propylene polymers also may include copolymers of propylene with minor amounts of a copolymerizable monomer. Typically, most useful are normally-solid polymers of propylene containing polypropylene crystallinity, random copolymers of propylene with up to about 10 wt.% ethylene, and impact copolymers containing up to about 20 wt.% ethylene or other alpha-olefin. Polypropylene homopolymers may contain a small amount (typically below 2 wt.%) of other monomers to the extent the properties of the homopolymer are not affected significantly.

Propylene polymers may be produced which are normally solid, predominantly isotactic, poly α-olefins. Levels of stereorandom by-products are sufficiently low so that useful products can be obtained without separation thereof. Typically, useful propylene homopolymers show polypropylene crystallinity and have isotactic indices above 90 and many times above 95. Copolymers typically will have lower isotactic indices, typically above 80-85.

Depending upon polymerisation conditions known in the art, propylene polymers with melt flow rates from below 1 to above 1000 may be produced in a reactor. For many applications, polypropylenes with a MFR from 2 to 100 are typical. Some uses such as for spunbonding may use a polymer with an MFR of 500 to 2000.

Depending upon the use of the polymer product, minor amounts of additives are typically incorporated into the polymer formulation such as acid scavengers, antioxidants, stabilizers, and the like. Generally, these additives are incorporated at levels of about 25 to 2000 ppm, typically from about 50 to about 1000 ppm, and more typically 400 to 1000 ppm, based on the polymer.

In use, polymers or copolymers made according to the invention in the form of a powder are conventionally compounded into pellets. Examples of uses for polymer compositions made according to the invention include use to form fibres, extruded films, tapes, spunbonded webs, moulded or thermoformed products, and the like. The polymers may be blown into films, or may be used for making a variety of moulded or extruded articles such as pipes, and containers such as bottles or drums. Specific additive packages for each application may be selected as known in the art. Examples of supplemental additives include slip agents, anti-blocks, anti-stats, mould release agents, primary and secondary anti-oxidants, clarifiers, nucleants, uv stabilizers, and the like. Classes of additives are well known in the art and include phosphite antioxidants, hydroxylamine (such as N,N-dialkyl hydroxylamine) and amine oxide (such as dialkyl methyl amine oxide) antioxidants, hindered amine light (uv) stabilizers, phenolic stabilizers, benzofuranone stabilizers, and the like. Various olefin polymer additives are described in U.S. patents 4,318,845, 4,325,863, 4,590,231, 4,668,721, 4,876,300, 5,175,312, 5,276,076, 5,326,802, 5,344,860, 5,596,033, and 5,625,090.

Fillers such as silica, glass fibers, talc, and the like, nucleating agents, and colourants also may be added to the polymer compositions as known by the art.

### EXAMPLES

### EXAMPLE 1

### Preparation of 2,6-diacetylpyridinebis(2,4,6-trimethylanil)

To a toluene (150 cm³) solution of 2,6-diacetylpyridine (2g; 0.0123 mol) in a single neck 250cm³ round bottom flask was added 2,4,6-trimethyl aniline (5.16cm³; 0.0368 mol). Toluenesulphonic acid-monohydrate (0.1 g) was added to the solution and the flask connected in series to a Dean-Stark apparatus and water cooled condenser fitted with a nitrogen bubbler. The reaction mixture was refluxed for 20 hours during which the produced water from the condensation reaction was collected in the Dean-Stark apparatus. Upon cooling to room temperature the volatile components of the reaction mixture were removed *in vacuo* and the product crystallised from methanol. The product was filtered, washed with cold methanol and dried in a vacuum oven at 50 °C overnight. NMR and IR analysis revealed the product to be exclusively 2,6-diacetylpyridinebis(2,4,6-trimethylanil). The yield was 4.23g (87 %).

### EXAMPLE 2

### Preparation of 2,6-diacetylpyridinebis(2,4,6-trimethylanil)FeCl₂

FeCl₂ (0.638 g, 0.005 mol) was dissolved in n-butanol (400 cm³) at 80 °C and the 2,6-diacetylpyridinebis(2,4,6-trimethylanil) (2 g, 0.005 mol) added as slurry in n-butanol. The reaction mixture immediately turned blue. After stirring at 80°C for 60 minutes the reaction was allowed to cool down to room temperature and stirred for 16 hours. The resultant suspension was filtered and the blue precipitate washed with toluene (2 x 200cm³) and pentane (1 x 100cm³) and dried *in vacuo*. The yield of 2,6-diacetylpyridinebis(2,4,6-trimethylanil)FeCl₂ was 2.56 g (97 %).

### EXAMPLE 3 (comparative)

### Supported Methylalumoxane Preparation

ES70X silica calcined at 200 °C (2 g) was added to a Schlenk tube and slurried in dry toluene (10 cm³). A 10% w/w solution of methylalumoxane (MAO) in toluene (2.81 cm³, 0.005 mol MAO) was then slowly added to the toluene/silica slurry and the mixture heated to 80 °C for 60 minutes after the addition of the MAO was completed.

### EXAMPLE 4

### In Situ Supported Methylalumoxane Preparation

Anhydrous, deoxygenated toluene (100cm³) was measured into a dried and deoxygenated Schlenk tube before adding distilled water (0.089cm³, 0.00494mol). The resulting mixture was vigorously stirred for 20 hours. ES70X silica calcined at 200°C (2g) was added to the toluene/water mixture and the resulting slurry was periodically shaken over 2 hours. A 2.0M solution of trimethylaluminium (TMA) in hexanes (2.465cm³, 0.00494mol TMA) was then slowly added to the toluene/silica slurry and the mixture heated to 80°C for 90 minutes after the addition of the TMA was completed.

### EXAMPLE 5 (comparative)

### Supported Catalyst Preparation

The preparation of 2,6-diacetylpyridinebis(2,4,6-trimethylanil)FeCl₂ and the silica supported methylalumoxane are described above. The 2,6-diacetylpyridinebis (2,4,6-trimethylanil)FeCl₂ (0.027g, 0.0000515 mol) was slurried in dried toluene (5cm³) and added to the silica/MAO slurry from example 3. The resulting mixture was heated for one hour with periodic agitation. The now clear supernatant was decanted off and the silica/MAO/Fe complex was dried *in vacuo* until all signs of fluidisation stopped to leave a light pink free flowing solid. Analysis of the catalyst gave a nominal composition of 0.12% w/w Fe and 12.7% w/w MAO.

### EXAMPLE 6 (comparative)

### Supported Catalyst Preparation

The preparation of 2,6-diacetylpyridinebis(2,4,6-trimethylanil)FeCl₂ and the silica supported methylalumoxane are described above. The 2,6-diacetylpyridinebis(2,4,6-trimethylanil)FeCl₂ (0.024g, 0.000046 mol) was slurried in dried toluene (5cm³) and added to the silica/MAO slurry from example 3. The resulting mixture was heated for one hour with periodic agitation. The now clear supernatant was decanted off and the silica/MAO/Fe complex was dried *in vacuo* until all signs of fluidisation stopped to leave a light pink free flowing solid. Analysis of the catalyst gave a nominal composition of 0.11% w/w Fe and 12.8% w/w MAO

### EXAMPLE 7

### Supported Catalyst Preparation

The preparation of 2,6-diacetylpyridinebis(2,4,6-trimethylanil)FeCl₂ and the silica supported methylalumoxane are described above. The 2,6-diacetylpyridinebis(2,4,6-trimethylanil)FeCl₂ (0.0262 g, 0.00005 mol) was slurried in dried toluene (5cm³) and added to the silica/MAO slurry from example 4. The resulting mixture was heated for one hour with periodic agitation. The now clear supernatant was decanted off and the silica/MAO/Fe complex was dried *in vacuo* until all signs of fluidisation stopped to leave a light pink free flowing solid. Analysis of the catalyst gave a nominal composition of 0.12% w/w Fe and 12.5% w/w MAO.

### EXAMPLE 8

### In Situ Supported Ethylalumoxane Preparation

Anhydrous, deoxygenated toluene (100cm³) was measured into a dried and deoxygenated Schlenk tube containing ES70X silica calcined at 200°C (2g) before adding distilled water (0.09cm³, 0.005mol). The resulting mixture was shaken periodically over 2 hours. A 1.0M solution of triethylaluminium (TEA) in hexanes (5cm³, 0.005mol TMA) was then slowly added to the toluene/silica slurry and the mixture heated to 80°C for 90 minutes after the addition of the TEA was completed.

### EXAMPLE 9

### Supported Catalyst Preparation

The preparation of 2,6-diacetylpyridinebis(2,4,6-trimethylanil)FeCl₂ and the silica supported ethylalumoxane are described above. The 2,6-diacetylpyridinebis (2,4,6-trimethylanil)FeCl₂ (0.027g, 0.0000515 mol) was slurried in dried toluene (5cm³) and added to the silica/alumoxane slurry from example 8. The resulting mixture was heated for one hour with periodic agitation. The now clear supernatant was decanted off and the silica/alumoxane/Fe complex was dried *in vacuo* until all signs of fluidisation stopped to leave a beige free flowing solid. Analysis of the catalyst gave a nominal composition of 0.12% w/w Fe and 5.8% w/w Al.

### Slurry Phase Polymerisation Tests

A 1L reactor was heated under flowing nitrogen for 1 hour at 90°C before being cooled to 30°C. Tri-isobutylaluminium (3ml of 1M in hexanes) followed by isobutane (500ml) was added to the reactor. The reactor was sealed and heated to 80°C. Ethylene was added to give a 8 bar rise in total pressure. The supported catalyst (~0.1 g) were weighed into a Schlenk tube, slurried in toluene (5cm³) and injected into the reactor. Constant reactor pressure and temperature were controlled during the test. Polymerisation was allowed to continue for 60 minutes. The catalyst activities from the slurry tests are set out in the following table.

| Example | Catalyst Charge (g) | Al/Fe Ratio | Activity g/mmol Fe/hr/bar | Productivity g/g cat/hr |
|---|---|---|---|---|
| 5 (comp) | 0.10 | 99:1 | 5230 | 928 |
| 6 (comp) | 0.10 | 111:1 | 5768 | 911 |
| 7 | 0.103 | 101:1 | 5778 | 990 |
| 9 | 0.099 | 100:1 | 2892 | 485 |
| "Comp" Denotes Comparative Example | | | | |

## Claims

1. Process for the preparation of a supported catalyst, comprising the steps of
a) contacting a support material containing 1-10 % water with a trialkylaluminium compound; and
b) contacting the resulting material with a complex of the formula (I) 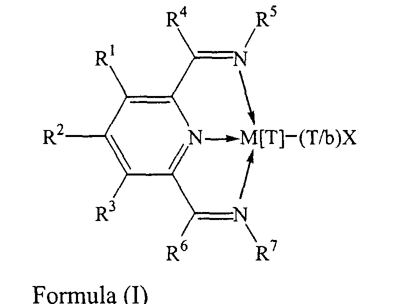
wherein M is Fe[II], Fe[III], Co[I], Co[II], Co[III], Mn[I], Mn[II], Mn[III], Mn[IV], Ru[II], Ru[III] or Ru[IV]; X represents an atom or group covalently or ionically bonded to the transition metal M; T is the oxidation state of the transition metal M and b is the valency of the atom or group X; R¹ to R⁷ are each independently selected from hydrogen, halogen, hydrocarbyl, substituted hydrocarbyl, heterohydrocarbyl, substituted heterohydrocarbyl or SiR'₃ where each R' is independently selected from hydrogen, halogen, hydrocarbyl, substituted hydrocarbyl, heterohydrocarbyl, substituted heterohydrocarbyl.

2. Process according to claim 1, wherein the support material is silica, alumina, aluminosilicate or crosslinked polystyrene/polyvinylalcohol.

3. Process according to claim 1 or 2, wherein the support material is first dehydrated before being contacted with a known amount of water.

4. Process according to any preceding claim wherein the support material is contacted with a solution of trialkylaluminium in an amount sufficient to provide a mole ratio of trialkylaluminium to water of from 3:1 to 1:2, preferably from 1.2:1 to 0.9:1.

5. Process according to claim 4 wherein the hydrated support is contacted with the trialkylaluminium in the presence of a solvent, preferably by adding the trialkylaluminium to the hydrated support.

6. Process according to claim 5 wherein the solvent comprises an inert hydrocarbon, preferably isobutane, butane, pentane, hexane, heptane, octane, cyclohexane, methylcyclohexane, toluene or xylene.

7. Process according to any preceding claim wherein the trialkylaluminium compound is trimethylaluminium (TMA), triethylaluminium (TEA), tri-isobutylaluminium (TIBA) or tri-n-octylaluminium.

8. Process according to any preceding claim wherein the trialkylaluminium solution and support material mixture is contacted with the transition metal complex of formula (I) in an amount sufficient to provide an aluminium to transition metal ratio of from 1000:1 to 1:1, preferably from 300:1 to 10:1, most preferably from 150:1 to 30:1.

9. Process according to any preceding claim wherein in the transition metal complex of formula (I), R⁵ is represented by the group "P" and R⁷ is represented by the group "Q" as follows: 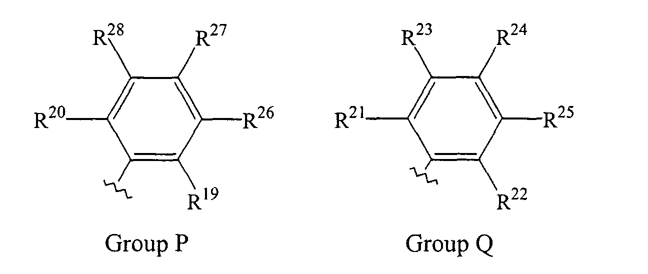 wherein R¹⁹ to R²⁸ are independently selected from hydrogen, halogen, hydrocarbyl, substituted hydrocarbyl, heterohydrocarbyl or substituted heterohydrocarbyl; when any two or more of R¹ to R⁴, R⁶ and R¹⁹ to R²⁸ are hydrocarbyl, substituted hydrocarbyl, heterohydrocarbyl or substituted heterohydrocarbyl, said two or more can be linked to form one or more cyclic substituents.

10. Process according to claim 9 wherein the transition metal complex of formula (I) comprises one or more of
2,6-diacetylpyridinebis(2,6-diisopropylanil)FeCl₂
2,6-diacetylpyridinebis(2,6-diisopropylanil)MnCl₂
2,6-diacetylpyridinebis(2,6-diisopropylanil)CoCl₂
2,6-diacetylpyridinebis(2-tert.-butylanil)FeCl₂
2,6-diacetylpyridinebis(2,3-dimethylanil)FeCl₂
2,6-diacetylpyridinebis(2-methylanil)FeCl₂
2,6-diacetylpyridinebis(2,4-dimethylanil)FeCl₂
2,6-diacetylpyridinebis(2,6-dimethylanil)FeCl₂
2,6-diacetylpyridinebis(2,4,6 trimethyl anil)FeCl₂
2,6-diacetylpyridinebis(2,6-dimethyl 4-t-butyl anil)FeCl₂
2,6-dialdiminepyridinebis(2,6-dimethylanil)FeCl₂
2,6-dialdiminepyridinebis(2,6-diethylanil)FeCl₂
2,6-dialdiminepyridinebis(2,6-diisopropylanil)FeCl₂
2,6-dialdiminepyridinebis(1-naphthil)FeCl₂ or
2,6-bis(1,1-diphenylhydrazone)pyridine.FeCl₂.
